# EUROPEAN PATENT APPLICATION

(11) **EP 3 747 946 A1**
(43) Date of publication of application: **09.12.2020**
(21) Application number: 19746581.8
(22) Date of filing: 31.01.2019
(51) Int. Cl.: C08L 53/02, B32B 27/12, B32B 27/30, C09J 7/21, C09J 11/06, C09J 153/00

(54) **ELASTIC HOT MELT COMPOSITION**

(30) Priority: 31.01.2018 JP 2018014377
(71) Applicant: Sekisui Fuller Company, Ltd., Tokyo 108-0075 (JP)
(72) Inventor: SOMEYA, Yu, Hamamatsu-shi, Shizuoka 430-0834 (JP)
(74) Representative: Müller-Boré & Partner Patentanwälte PartG mbB
(86) International application number: PCT/JP2019/003284
(87) International publication number: WO 2019/151369

(57) **Abstract**

This invention provides an elastic hot melt composition that has excellent stretchability, excellent elastic recovery after elongation, shows appropriate stress at elongation, and has excellent heating stability, and that is applicable with a commonly used hot melt adhesive applicator. The invention provides an elastic hot melt composition comprising a thermoplastic elastomer (A) and a plasticizer (B), wherein the thermoplastic elastomer (A) contains a hydrogenated product of a styrene block copolymer, the thermoplastic elastomer (A) is present in an amount of 45 to 75 mass%, and the plasticizer (B) is present in an amount of 5 to 40 mass%, per 100 mass% of the elastic hot melt composition, and the elastic hot melt composition has a melt viscosity at 180°C of 40,000 mPa·s or less.

## Description

### Technical Field

The present invention relates to an elastic hot melt composition.

### Background Art

In recent years, sanitary materials, such as disposable diapers and sanitary napkins, have been widely used. For these sanitary materials, elastic laminates composed of members with elasticity are used to prevent the sanitary materials from slipping off when worn.

Known members with elasticity used for the elastic laminates include natural rubber and rubber thread, which is a synthetic polymer in the form of a thread. Rubber thread, which shows excellent stress at elongation, is effective in preventing the sanitary materials from slipping off when worn.

Further, an elastic film containing a thermoplastic elastomer has been proposed as an elastic member of the elastic laminate provided with sanitary materials (see, for example, Patent Literature (PTL) 1). PTL 1 discloses an elastic film containing a thermoplastic elastomer and a hydrophilic resin. According to this elastic film, an elastic film that has excellent moisture permeability and flexibility, and that is suitable for sanitary materials, such as sanitary products, is provided.

Furthermore, a hot melt elastic adhesive composition has been proposed as an elastic material that can be used with a hot melt adhesive applicator (see, for example, PTL 2). PTL 2 discloses a hot melt elastic adhesive composition containing a block copolymer containing an elastic polymer segment comprising at least one polymer selected from hydrogenated butadiene polymer, hydrogenated isoprene polymer, and ethylene propylene polymer, and a polystyrene polymer segment. According to this hot melt elastic adhesive composition that can be applied with a commonly used hot melt applicator and that itself has both adhesiveness and elasticity, a hot melt adhesive that can easily form a gather part is provided by laminating the adhesive on a base material, such as a nonwoven fabric.

### Citation List

### Patent Literature

PTL 1: JP2015-86367A
PTL 2: JP2919385B

### Summary of Invention

### Technical Problem

However, when the rubber thread mentioned above is used as an elastic member for the elastic laminate, a linear pressure is applied to a human body, which causes an oppressive feeling or a rash when worn. Further, multiple thin rubber threads are used for sanitary materials, and the rubber threads are easily cut during the production of sanitary materials, which often makes the production of sanitary materials difficult.

According to the elastic film of PTL 1, the problems caused by the use of rubber threads are solved; however, an extruder is required in the production since the composition for producing the elastic film has a high viscosity, and a commonly used hot melt adhesive applicator cannot be used, thus resulting in poor productivity of sanitary materials. Further, the heating stability of the elastic film of PTL 1 is not sufficiently analyzed, posing a problem such that the composition undergoes thermal deterioration when heated during production.

Moreover, the hot melt elastic adhesive composition of PTL 2 shows low stress at elongation, which causes a problem such that a sanitary material comprising an elastic laminate containing this elastic adhesive composition may slip off when worn. Further, the elastic recovery after elongation of this elastic adhesive composition is not sufficient for use as an elastic member.

In view of the above circumstances, an object of the present invention is to provide an elastic hot melt composition that has excellent stretchability, excellent elastic recovery after elongation, shows appropriate stress at elongation, and has excellent heating stability, and that is applicable with a commonly used hot melt adhesive applicator.

### Solution to Problem

The present inventors have conducted extensive research to solve the above problems, and found that the problems can be solved by an elastic hot melt composition comprising a thermoplastic elastomer (A) and a plasticizer (B), wherein the thermoplastic elastomer (A) contains a hydrogenated product of a styrene block copolymer, the thermoplastic elastomer (A) and the plasticizer (B) are present in specific amount ranges, and the melt viscosity at 180°C is 40,000 mPa·s or less. The present invention has thus been completed.

More specifically, the present invention relates to the following elastic hot melt composition.
1. An elastic hot melt composition comprising a thermoplastic elastomer (A) and a plasticizer (B),
   wherein the thermoplastic elastomer (A) contains a hydrogenated product of a styrene block copolymer,
   the thermoplastic elastomer (A) is present in an amount of 45 to 75 mass%, and the plasticizer (B) is present in an amount of 5 to 40 mass%, per 100 mass% of the elastic hot melt composition, and the elastic hot melt composition has a melt viscosity at 180°C of 40,000 mPa·s or less.
2. The elastic hot melt composition according to Item 1, wherein the thermoplastic elastomer (A) contains a styrene-ethylene/butylene/styrene-styrene copolymer.
3. The elastic hot melt composition according to Item 1 or 2, further comprising 5 to 35 mass% of wax (C) containing at least one group selected from the group consisting of a carbonyl group, a carboxyl group, and a carboxylic anhydride group, in the molecule.
4. The elastic hot melt composition according to any one of Items 1 to 3, having a loss tangent tan δ (loss elastic modulus G"/storage elastic modulus G') of 1.5 or less at a temperature at which the tan δ measured in a temperature increasing process at a frequency of 1 Hz by dynamic viscoelasticity measurement is local maximum at -60 to -20°C.
5. An elastic laminate comprising the elastic hot melt composition of any one of Items 1 to 4, wherein at least one surface side of the elastic hot melt composition is bonded to a nonwoven fabric.

### Advantageous Effects of Invention

The elastic hot melt composition of the present invention has excellent stretchability, excellent elastic recovery after elongation, shows appropriate stress at elongation, has excellent heating stability, and is applicable with a commonly used hot melt adhesive applicator.

### Description of Embodiments

### 1. Elastic Hot Melt Composition

The elastic hot melt composition of the present invention comprises a thermoplastic elastomer (A) and a plasticizer (B). The thermoplastic elastomer (A) contains a hydrogenated product of a styrene block copolymer. The thermoplastic elastomer (A) is present in an amount of 45 to 75 mass%, and the plasticizer (B) is present in an amount of 5 to 40 mass%, per 100 mass% of the elastic hot melt composition. The elastic hot melt composition has a melt viscosity at 180°C of 40,000 mPa·s or less. The elastic hot melt composition of the present invention, which has the above features, has excellent stretchability, excellent elastic recovery after elongation, shows appropriate stress at elongation, has excellent heating stability, and is applicable with a commonly used hot melt adhesive applicator.

The elastic hot melt composition of the present invention can be suitably used as a member used for an elastic laminate provided with sanitary materials and the like. Natural rubber and rubber thread, which is a synthetic polymer in the form of a thread, are generally known as a member used for the elastic laminate. Conventional elastic members used for gather parts of sanitary materials are formed by bonding multiple rubber threads to a base material such as a nonwoven fabric. The elastic member formed in this manner has excellent elasticity. Therefore, when this elastic member is used for an absorbent article, slippage is less likely to occur when worn, and a sense of security can be given to the wearer. However, the elastic laminate formed in the above manner can cause a strong tightening feeling since the linear pressure is applied to the waist circumference of the wearer due to the linear rubber thread.

The use of an elastic member using an elastic film that tightens the waist circumference with its surface pressure can achieve a satisfactory tightening feeling, since the pressure applied to the wearer is dispersed. However, elastic films have a high viscosity, and are not of a hot melt-type. Thus, a commonly used hot melt applicator cannot be used for application, making the production process of sanitary materials complicated.

When a hot melt elastic adhesive composition is used as an elastic member, it is possible to use a commonly used hot melt applicator to produce an elastic laminate that tightens the wearer with its surface pressure. However, conventional hot melt elastic adhesive compositions show low stress at elongation; thus, a sufficient tightening feeling cannot be given when worn, and the sanitary material can slip off.

On the other hand, when the elastic hot melt composition of the present invention is used for an elastic member of an elastic laminate of sanitary materials, application is possible with a commonly used hot melt applicator. Thus, the production process for sanitary materials is not made complicated. Additionally, the stress at elongation is high. Therefore, a sanitary material comprising an elastic laminate obtained by using this elastic hot melt composition as an elastic member is prevented from slipping off when worn, giving the wearer a sense of security.

The elastic hot melt composition of the present invention will be described in detail below.

### Thermoplastic Elastomer (A)

A thermoplastic elastomer (A) contains a hydrogenated product of a styrene block copolymer. The term "hydrogenated product of a styrene block copolymer" refers to a block copolymer obtained by block copolymerization of a vinyl aromatic hydrocarbon and a conjugated diene compound, and hydrogenation of all or part of the blocks based on the conjugated diene compound in the obtained block copolymer.

The vinyl aromatic hydrocarbon is a vinyl group-containing aromatic hydrocarbon compound. Specific examples of vinyl aromatic hydrocarbons include styrene, o-methyl styrene, p-methyl styrene, p-tert-butyl styrene, 1,3-dimethyl styrene, α-methyl styrene, vinyl naphthalene, vinyl anthracene, and the like. Among these, styrene is preferable. The vinyl aromatic hydrocarbons may be used alone, or in a combination of two or more.

The conjugated diene compound refers to a diolefin compound containing at least one pair of conjugated double bonds. Specific examples of conjugated diene compounds include 1,3-butadiene, 2-methyl-1,3-butadiene (or isoprene), 2,3-dimethyl-1,3-butadiene, 1,3-pentadiene, 1,3-hexadiene, and the like. Among these, 1,3-butadiene and 2-methyl-1,3-butadiene are preferable. The conjugated diene compounds may be used alone, or in a combination of two or more.

In the present specification, the hydrogenated proportion in hydrogenated thermoplastic block copolymers, such as a hydrogenated product of a styrene block copolymer, is expressed as "hydrogenation percentage." The "hydrogenation percentage" of a hydrogenated thermoplastic block copolymer is based on the total ethylenically unsaturated double bonds present in the blocks based on the conjugated diene compound. The "hydrogenation percentage" refers to a percentage of ethylenically unsaturated double bonds that are hydrogenated and converted into saturated hydrocarbon bonds in the total ethylenically unsaturated double bonds. The hydrogenation percentage can be measured with an infrared spectrophotometer, a nuclear magnetic resonance apparatus, or the like.

The hydrogenated product of a styrene block copolymer is preferably completely hydrogenated. When the hydrogenated product of a styrene block copolymer is completely hydrogenated, the heating stability of the elastic hot melt composition further improves. The hydrogenation percentage of the hydrogenated product of a styrene block copolymer is preferably about 100%.

The hydrogenated product of a styrene block copolymer is not particularly limited, and contains at least one member selected from styrene-ethylene-butylene-styrene copolymer (SEBS), styrene-butylene-butadiene-styrene copolymer (SBBS), styrene-ethylene/butylene/styrene-styrene copolymer (S-E/B/S-S), styrene-ethylene-propylene-styrene copolymer (SEPS), styrene-ethylene-ethylene-propylene-styrene copolymer (SEEPS), and styrene-ethylene-butylene-olefin crystal copolymer (SEBC). Since the thermoplastic elastomer (A) has this structure, the elastic hot melt composition of the present invention has excellent stretchability, excellent elastic recovery after elongation, shows appropriate stress at elongation, and has excellent heating stability. Among these, a styrene-ethylene-butylene-styrene copolymer or a styrene-ethylene/butylene/styrene-styrene copolymer is preferable to achieve further improved elastic recovery after elongation, as well as achieve both further improved stress at elongation and further improved stretchability.

In the styrene-ethylene-butylene-styrene copolymer, the terminal styrene units serve as end-block phases, and the ethylene-butylene unit serves as a mid-block phase. When a copolymer having a hydrogenated ethylene-butylene unit as the mid-block phase is used, the difference in polarity becomes more significant between the mid-block phase and the styrene units of the end-block phases; this makes the styrene units of the end-block phases stronger, compared to copolymers having an unhydrogenated mid-block phase. This consequently further improves stress at elongation of the elastic hot melt composition. Furthermore, with the hydrogenated mid-block phase, an elastic hot melt composition with further improved heating stability can be provided.

The styrene content of the styrene-ethylene-butylene-styrene copolymer is preferably 15 to 45 mass%, and more preferably 20 to 40 mass%, per 100 mass% of the styrene-ethylene-butylene-styrene copolymer. When the lower limit of the styrene content is within this range, the elastic recovery after elongation of the elastic hot melt composition is further improved. When the upper limit of the styrene content is within this range, the elastic hot melt composition is more softened, and achieves excellent stretchability.

In the present specification, the term "styrene content" of the styrene block copolymers refers to the styrene block content (mass%) of the styrene block copolymers.

Further, in the present specification, the method for calculating the styrene content of the styrene block copolymer is not particularly limited. Examples include a method that uses a proton nuclear magnetic resonance method or infrared spectroscopy, according to JIS K6239.

The styrene-ethylene-butylene-styrene copolymer may be a commercially available product. Examples of the commercially available product include G1650 produced by Kraton Polymers Japan Ltd., MD1648 produced by Kraton Polymers Japan Ltd., Tuftec H1041 produced by Asahi Kasei Co., Ltd., and the like.

The styrene-ethylene-butylene-styrene copolymers may be used alone, or in a combination of two or more. For example, a styrene-ethylene-butylene-styrene copolymer with a high styrene content and a styrene-ethylene-butylene-styrene copolymer with a low styrene content may be used in combination. The styrene content of the entire styrene-ethylene-butylene-styrene copolymers when two or more styrene-ethylene-butylene-styrene copolymers are used in combination may be calculated as an average value based on the weight.

The styrene-ethylene/butylene/styrene-styrene copolymer is a copolymer in which styrene is also dispersed in the mid-block phase in a styrene-ethylene-butylene-styrene copolymer in which the terminal styrene units serve as the end-block phases, and the ethylene-butylene unit serves as the mid-block phase. When styrene is dispersed in the mid-block phase, the styrene block copolymer is prevented from becoming overly hard even when the styrene block copolymer has a high total styrene content, showing excellent stretchability. Therefore, an elastic hot melt composition that comprises a styrene-ethylene/butylene/styrene-styrene copolymer can achieve both excellent stretchability and improved stress at elongation. Furthermore, when a styrene-ethylene/butylene/styrene-styrene copolymer, in which styrene is dispersed in the mid-block phase, is used in the elastic hot melt composition, an increase in the melt viscosity at low temperatures is prevented; thus, the coatability of the elastic hot melt composition is further improved.

The method for preparing a styrene-ethylene/butylene/styrene-styrene copolymer is not particularly limited. Examples include the method disclosed in US Patent No. 7,169,848.

The styrene content of the styrene-ethylene/butylene/styrene-styrene copolymer is preferably 20 to 60 mass%, and more preferably 25 to 55 mass%, per 100 mass% of the styrene-ethylene/butylene/styrene-styrene copolymer. When the lower limit of the styrene content is within this range, the elastic recovery after elongation of the elastic hot melt composition is further improved. When the upper limit of the styrene content is within this range, the elastic hot melt composition is more softened, and achieves excellent stretchability.

The styrene-ethylene/butylene/styrene-styrene copolymer may be a commercially available product. Examples of the commercially available product include MD6951 produced by Kraton Polymers Japan Ltd., A1536 produced by Kraton Polymers Japan Ltd., and the like.

The styrene-ethylene/butylene/styrene-styrene copolymer may be used alone, or in a combination of two or more. For example, a styrene-ethylene/butylene/styrene-styrene copolymer with a high styrene content and a styrene-ethylene/butylene/styrene-styrene copolymer with a low styrene content may be used in combination. When two or more styrene-ethylene/butylene/styrene-styrene copolymers are used in combination, the styrene content of the entire styrene-ethylene/butylene/styrene-styrene copolymers may be calculated as an average value based on the weight.

The amount of the thermoplastic elastomer (A) contained in the elastic hot melt composition of the present invention is 45 to 75 mass% per 100 mass% of the elastic hot melt composition. If the amount of the thermoplastic elastomer (A) is out of this range, the elastic hot melt composition of the present invention does not achieve sufficient stretchability, sufficient elastic recovery after elongation, or sufficient stress at elongation. The amount of the thermoplastic elastomer (A) is preferably 50 to 70 mass%, and more preferably 55 to 65 mass%.

The styrene content of the thermoplastic elastomer (A) in the elastic hot melt composition of the present invention is preferably 10 to 35 mass%, and more preferably 12 to 25 mass%, per 100 mass% of the thermoplastic plastic elastomer (A). When the lower limit of the styrene content is within this range, the elastic recovery after elongation of the elastic hot melt composition is further improved. When the upper limit of the styrene content is within this range, the elastic hot melt composition is more softened, and achieves excellent stretchability.

The thermoplastic elastomer (A) in the elastic hot melt composition of the present invention preferably has a weight average molecular weight (Mw) of 30,000 to 200,000, more preferably 40,000 to 150,000, and even more preferably 45,000 to 125,000. When the weight average molecular weight is 30,000 or more, the elastic recovery after elongation of the elastic hot melt composition is further improved. When the weight average molecular weight is 200,000 or less, the elastic hot melt composition is more softened, and achieves excellent stretchability.

The weight average molecular weight (Mw) of the thermoplastic elastomer refers to a measurement value obtained by gel permeation chromatography measurement apparatus and calculated by standard polystyrene conversion.

In the present invention, the weight average molecular weight (Mw) can be measured, for example, by using the following measurement device and measurement conditions.
Measurement device: ACQUITY APC, a product of Nihon Waters K.K.
Measurement conditions: columns
   - ACQUITY APC XT45 1.7 µm × 1
   - ACQUITY APC XT125 2.5 µm × 1
   - ACQUITY APC XT450 2.5 µm × 1
Mobile phase: Tetrahydrofuran, 0.8 mL/min
Sample concentration: 0.2 mass%
Detector: Differential refractive index (RI) detector
Reference material: Polystyrene (a product of Nihon Waters K.K., molecular weight: 266 to 1,800,000)
Column temperature: 40°C
RI detector temperature: 40°C

### Plasticizer (B)

The elastic hot melt composition of the present invention comprises a plasticizer (B). The plasticizer (B) is preferably liquid at 23°C. In the present specification, the term "liquid" refers to a state of having fluidity. The pour point of the plasticizer (B) is preferably 23°C or lower, and more preferably 10°C or lower.

In the present specification, the pour point refers to a value measured by a measurement method in accordance with JIS K2269.

Examples of the plasticizer (B) include, but are not particularly limited to, paraffinic process oil, naphthenic process oil, aromatic process oil, liquid paraffin, hydrocarbon-based synthetic oil, and the like. Among these, paraffinic process oil, naphthenic process oil, liquid paraffin, and hydrocarbon-based synthetic oil are preferable to achieve excellent heating stability; and hydrocarbon-based synthetic oil is more preferable to achieve further improved elastic recovery after elongation.

The paraffinic process oil can be a commercially available product. Examples of the commercially available product include PW-32 produced by Idemitsu Kosan Co., Ltd., PS-32 produced by Idemitsu Kosan Co., Ltd., and the like.

The naphthenic process oil can be a commercially available product. Examples of the commercially available product include Diana Fresia N28 produced by Idemitsu Kosan Co., Ltd., Diana Fresia U46 produced by Idemitsu Kosan Co., Ltd., Nyflex 222B produced by Nynas, and the like.

The liquid paraffin can be a commercially available product. Examples of the commercially available product include P-100 produced by MORESCO Corporation, Kaydol produced by Sonneborn, LLC, and the like.

The hydrocarbon-based synthetic oil can be a commercially available product. Examples of the commercially available product include Lucant HC-10 produced by Mitsui Chemicals, Inc., Lucant HC-40 produced by Mitsui Chemicals, Inc., and the like.

These plasticizers may be used alone, or in a combination of two or more.

The amount of the plasticizer (B) contained in the elastic hot melt composition of the present invention is 5 to 40 mass% per 100 mass% of the elastic hot melt composition. If the amount of the plasticizer (B) is less than 5 mass%, the elastic hot melt composition has a high melt viscosity, and the coating applicability of the elastic hot melt composition is not sufficient. If the amount of the plasticizer (B) exceeds 40 mass%, the elastic hot melt composition becomes overly soft, and the stress at double elongation is reduced. The amount of the plasticizer (B) is preferably 10 to 35 mass%, and more preferably 12 to 30 mass%.

### Wax (C)

The elastic hot melt composition of the present invention may comprise wax (C) containing, in the molecule, at least one group selected from the group consisting of a carbonyl group, a carboxyl group, and a carboxylic anhydride group. The wax (C) is preferably solid at 23°C. In the present specification, the term "solid" refers to a state of not having fluidity. The softening point of the wax (C) is preferably 23°C or higher, more preferably 30°C or higher, and even more preferably 40°C or higher.

In the present specification, the softening point is a value measured by the measurement method according to ASTM D-3954.

The wax containing at least one group selected from the group consisting of a carbonyl group, a carboxyl group, and a carboxylic anhydride group, in the molecule has a high polarity, and thus has excellent compatibility with styrene block copolymers, achieving excellent dispersion in the composition. Therefore, the use of this wax can further improve the heating stability of the elastic hot melt composition, as compared with a wax that contains no carbonyl group, carboxyl group, or carboxylic anhydride group in the molecule. The wax (C) containing at least one group selected from the group consisting of a carbonyl group, a carboxyl group, and a carboxylic anhydride group, in the molecule is not particularly limited. Examples include vinyl acetate wax, acrylic acid wax, maleic anhydride-modified wax, and the like. Among these, vinyl acetate wax is preferable to achieve further improved heating stability.

The vinyl acetate wax can be a commercially available product. Examples of the commercially available product include AC-400 produced by Honeywell International Inc., AC-430 produced by Honeywell International Inc., and the like.

The acrylic acid wax can be a commercially available product. Examples of the commercially available product include AC-540 produced by Honeywell International Inc., AC-580 produced by Honeywell International Inc., and the like.

The maleic anhydride-modified wax can be a commercially available product. Examples of the commercially available product include AC-573P produced by Honeywell International Inc., AC-577P produced by Honeywell International Inc., MAW-0300 produced by Nippon Seiro Co., Ltd., and the like.

The waxes containing at least one group selected from the group consisting of a carbonyl group, a carboxyl group, and a carboxylic anhydride group, in the molecule may be used alone, or in a combination of two or more.

The amount of the wax (C) contained in the elastic hot melt composition of the present invention is preferably 5 to 40 mass%, more preferably 5 to 35 mass%, and even more preferably 10 to 30 mass%, per 100 mass% of the elastic hot melt composition. When the lower limit of the amount of wax (C) is within this range, the stress at double elongation of the elastic hot melt composition is further improved. When the upper limit of the amount of the wax (C) is within this range, the permanent set of the elastic hot melt composition is further improved.

### Other Additives

The elastic hot melt composition of the present invention may comprise other additives, as long as the objects of the present invention are not essentially impaired. Examples of the other additives include antioxidants, UV absorbers, tackifying resins, liquid rubbers, fine particulate fillers, and the like.

Examples of antioxidants include hindered phenolic antioxidants, such as 2,6-di-t-butyl-4-methylphenol, n-octadecyl-3-(4'-hydroxy-3',5'-di-t-butylphenyl)propionate, 2,2'-methylenebis(4-methyl-6-t-butylphenol), 2,2'-methylenebis(4-ethyl-6-t-butylphenol), 2,4-bis(octylthiomethyl)-o-cresol, 2-t-butyl-6-(3-t-butyl-2-hydroxy-5-methylbenzyl)-4-methylphenyl acrylate, 2,4-di-t-amyl-6-[1-(3,5-di-t-amyl-2-hydroxyphenyl)ethyl]phenyl acrylate, 2-[1-(2-hydroxy-3,5-di-tert-pentylphenyl)]acrylate, and tetrakis[methylene-3-(3,5-di-t-butyl-4-hydroxyphenyl)propionate]methane; sulfur antioxidants, such as dilauryl thiodipropionate, lauryl stearyl thiodipropionate, and pentaerythritol tetrakis(3-lauryl thiopropionate); phosphorus antioxidants, such as tris(nonylphenyl)phosphite and tris(2,4-di-t-butylphenyl)phosphite; and the like. The antioxidants may be used alone, or in a combination of two or more.

The amount of the antioxidant contained in the elastic hot melt composition of the present invention is preferably 0.01 to 2 mass%, more preferably 0.05 to 1.5 mass%, and even more preferably 0.1 to 1 mass%, per 100 mass% of the elastic hot melt composition. An amount of the antioxidant of 0.01 mass% or more achieves further improved heating stability of the elastic hot melt composition. An amount of the antioxidant of 2 mass% or less achieves a reduction in the unpleasant odor of the elastic hot melt composition.

Examples of UV absorbers include benzotriazole UV absorbers, such as 2-(2'-hydroxy-5'-methylphenyl)benzotriazole, 2-(2'-hydroxy-3',5'-t-butylphenyl)benzotriazole, and 2-(2'-hydroxy-3', 5'-di-t-butylphenyl)-5-chlorobenzotriazole; benzophenone UV absorbers, such as 2-hydroxy-4-methoxybenzophenone; salicylate UV absorbers; cyanoacrylate UV absorbers; and hindered amine light stabilizers. The UV absorbers may be used alone, or in a combination of two or more.

The amount of the UV absorber contained in the elastic hot melt composition of the present invention is preferably 0.01 to 2 mass%, more preferably 0.05 to 1.5 mass%, and even more preferably 0.1 to 1 mass%, per 100 mass% of the elastic hot melt composition. An amount of the UV absorber of 0.01 mass% or more improves the weather resistance of the elastic hot melt composition. An amount of the UV absorber of 2 mass% or less achieves a reduction in the unpleasant odor of the elastic hot melt composition.

Examples of tackifying resins include natural rosins, modified rosins, natural rosin glycerol esters, modified rosin glycerol esters, natural rosin pentaerythritol esters, modified rosin pentaerythritol esters, natural terpene copolymers, natural terpene three-dimensional polymers, hydrogen derivatives of natural terpene copolymers, terpene resins, hydrogenated derivatives of phenol-modified terpene resins; petroleum resins, such as C5 petroleum resins, C9 petroleum resins, C5C9 petroleum resins, and dicyclopentadiene petroleum resins; partially or fully hydrogenated petroleum resins obtained by adding hydrogen to these petroleum resins; and the like. The tackifying resin is preferably petroleum resins, partially hydrogenated petroleum resins, or fully hydrogenated petroleum resins, and more preferably partially hydrogenated petroleum resins or fully hydrogenated petroleum resins to achieve a reduction in the unpleasant odor and excellent heating stability of the elastic hot melt composition. These tackifying resins may be used alone, or in a combination of two or more.

The ring-and-ball softening point temperature of the tackifying resin is preferably 80°C or higher, and more preferably 90°C or higher to achieve further improved elasticity and further improved heating stability of the elastic hot melt composition. The ring-and-ball softening point temperature of the tackifying resin is preferably 125°C or lower, and more preferably 120°C or lower to impart further flexibility to the elastic hot melt composition and to further prevent weakening of the elastic hot melt composition. In the present specification, the ring-and-ball softening point temperature of the tackifying resin refers to a value measured in accordance with JIS K2207.

The amount of the tackifying resin contained in the elastic hot melt composition of the present invention is preferably 30 mass% or less, more preferably 20 mass% or less, and even more preferably 15 mass% or less, per 100 mass% of the elastic hot melt composition. An amount of the tackifying resin of 30 mass% or less prevents the elastic hot melt composition from becoming overly hard, and further improves the elastic recovery after elongation.

Examples of liquid rubbers include liquid polybutene, liquid polybutadiene, liquid polyisoprene, and hydrogenated resins thereof. The liquid rubbers may be used alone, or in a combination of two or more.

The amount of the liquid rubber contend in the elastic hot melt composition of the present invention is preferably 1 to 20 mass%, more preferably 2 to 15 mass%, and even more preferably 3 to 10 mass%, per 100 mass% of the elastic hot melt composition. An amount of the liquid rubber of 1 mass% or more reduces the melt viscosity of the elastic hot melt composition, and further improves the coating applicability. An amount of the liquid rubber of 20 mass% or less prevents the elastic hot melt composition from becoming overly soft, and achieves further improved stress at double elongation.

Examples of fine particulate fillers include, but are not particularly limited to, calcium carbonate, kaolin, talc, titanium oxide, mica, styrene beads, and the like. The fine particulate fillers may be used alone, or in a combination of two or more.

The elastic hot melt composition of the present invention has a melt viscosity at 180°C of 40,000 mPa·s or less. If the melt viscosity exceeds 40,000 mPa·s, the coating applicability of the elastic hot melt composition is insufficient. The melt viscosity at 180°C of the elastic hot melt composition is preferably 28,000 mPa·s or less, and more preferably 22,000 mPa·s or less. The lower limit of the melt viscosity at 180°C of the elastic hot melt composition is not particularly limited, and may be about 5,000 mPa·s.

In the present specification, the term "melt viscosity" refers to a viscosity of a hot melt adhesive that has become a molten state by heating at a certain temperature. The melt viscosity at 180°C may be measured, for example, by heating and melting an elastic hot melt composition, and measuring the viscosity of the composition in a molten state at 180°C using a Brookfield RVT viscometer (spindle No. 29).

The elastic hot melt composition of the present invention has a loss tangent tan δ (loss elastic modulus G"/storage elastic modulus G') of preferably 1.5 or less, more preferably 1.3 or less, and even more preferably 1.1 or less at a temperature at which the tan δ measured in a temperature increasing process at a frequency of 1 Hz by dynamic viscoelasticity measurement is local maximum at -60°C to -20°C. When the value of tan δ is 1.5 or less, the viscosity decreases since the viscous property of the elastic hot melt composition is lowered, and the composition is hardened; thus, the stress at double elongation of the elastic hot melt composition is further improved. The lower limit of tan δ is not particularly limited, and is about 0.2.

The dynamic viscoelasticity measurement is performed at a fixed frequency of 1 Hz (rotary shear mode). Specifically, the dynamic viscoelasticity measurement is performed by the following method. That is, the elastic hot melt composition is heated and melted at 180°C, and then dropped onto a release-treated PET film. Then, another release-treated PET film is laminated on the elastic hot melt composition so that its release surface is in contact with the elastic hot melt composition. The resulting product is compressed with a hot press heated to 120°C, and the thickness of the elastic hot melt composition is adjusted to about 1 to 2 mm. After the elastic hot melt composition sandwiched between the release films is allowed to stand for 24 hours at 23°C, the release films are removed to thus prepare a sample for dynamic viscoelasticity measurement. A dynamic viscoelasticity measurement (temperature increasing process) is performed with respect to the resulting sample by using a dynamic viscoelasticity measuring device at a frequency of 1 Hz (rotary shear mode), while increasing the temperature from -80 to 130°C at a rate of 5°C/min. The loss tangent tan δ (loss elastic modulus G"/storage elastic modulus G') is calculated from the measured storage elastic modulus G' and loss elastic modulus G". The value of tan δ at a temperature at which the tan δ is local maximum within a temperature range of -60 to -20°C is recorded, which is considered to be a local maximum tan δ value. Examples of the dynamic viscoelasticity measuring device include a rotation rheometer (trade name: AR-G2) produced by TA Instruments, and the like.

When the elastic hot melt composition of the present invention is measured by dynamic viscoelasticity measurement at a frequency of 1 Hz in a temperature increasing process from -80 to 130°C at a rate of 5°C/min, the elastic hot melt composition preferably has a temperature at which the loss tangent tan δ (= loss elastic modulus G"/storage elastic modulus G') is local maximum within a temperature range of -60 to -20°C. When the elastic hot melt composition is heated from -80°C, the state of the composition will change from glass to rubber as the molecular motion increases. At this time, the value of tan δ becomes local maximum, and the temperature at this time is evaluated as a glass transition temperature.

The elastic hot melt composition of the present invention has stretchability of preferably 350% or more, more preferably 450% or more, and even more preferably 550% or more. When the stretchability of the elastic hot melt composition is 350% or more, breakage is prevented in the composition at elongation when the sanitary material is worn. Further, when an elastic laminate is produced by stretching the elastic hot melt composition, the stretching rate can be appropriately changed while preventing the elastic hot melt composition from breaking.

The stretchability of the elastic hot melt composition of the present invention is measured by the following measurement method by using a coating sample of the elastic hot melt composition prepared by the following method.

### Method for Preparing Coating Sample of Elastic Hot Melt Composition

The elastic hot melt composition is applied at a coating temperature of 180°C to a release-treated PET film by slot coating. The coating amount is 50 g/m², and the coating width is 100 mm. Next, another release-treated PET film is laminated and pressure-bonded at room temperature to form a laminate. The obtained laminate is stored for 24 hours in an atmosphere at 23°C and 50% RH, followed by cooling the elastic hot melt composition to room temperature, thus preparing a coating sample of the elastic hot melt composition.

### Method for Measuring Stretchability

The coating sample of the elastic hot melt composition is cut into a strip having a width of 50 mm in the coating direction and 100 mm in a direction perpendicular to the coating direction to prepare a test piece. Next, the release-treated PET films at both sides are peeled off, and the test piece is fixed with a jig to a tensile tester in which the jig width is set to 50 mm such that the direction perpendicular to the coating direction of the elastic hot melt composition is positioned in an upright direction. The test piece is then pulled at a tensile speed of 500 mm/min until the test piece breaks. The displacement at which the test piece breaks is considered to be an elongation at break (%), which is used as an evaluation standard for the stretchability of the elastic hot melt composition.

The stress at double elongation of the elastic hot melt composition of the present invention is preferably 2.0×10⁻⁴ N/mm² or more, more preferably 3.2×10⁻⁴ N/mm² or more, and even more preferably 4.0×10⁻⁴ N/mm² or more. When the stress at double elongation of the elastic hot melt composition is 2.0×10⁻⁴ N/mm² or more, the sanitary material is more efficiently prevented from slipping off when worn.

The stress at double elongation of the elastic hot melt composition of the present invention may be less than 2.0×10⁻⁴ N/mm². When the stress at double elongation of the elastic hot melt composition is less than 2.0×10⁻⁴ N/mm², the composition can be suitably used for usages other than the sanitary materials mentioned above and the like. In this case, the stress at double elongation of the elastic hot melt composition is preferably 2.0×10⁻⁴ N/mm² or less, more preferably 1.8×10⁻⁴ N/mm² or less, and even more preferably 1.5×10⁻⁴ N/mm² or less. In this case, the lower limit of the stress at double elongation of the elastic hot melt composition is not particularly limited, and is about 0.1×10⁻⁴ N/mm².

The stress at double elongation of the elastic hot melt composition of the present invention is measured by the following measurement method using the above coating sample of the elastic hot melt composition.

### Method for Measuring Stress at Double Elongation

The coating sample of the elastic hot melt composition is cut into a strip having a width of 50 mm in the coating direction and 100 mm in a direction perpendicular to the coating direction to prepare a test piece. Next, the release-treated PET films at both sides are peeled off, and the test piece is fixed with a jig to a tensile tester in which the jig width is set to 50 mm such that the direction perpendicular to the coating direction of the elastic hot melt composition is positioned in an upright direction. The test piece is then pulled at a tensile speed of 500 mm/min until the strain displacement of the test piece becomes 300%. Then, the position is returned to the initial position at a rate of 500 mm/min. A process comprising pulling a test piece to the point where the strain displacement is 300% and then returning it to the initial position is taken as one cycle, and this cycle is repeated twice for the same test piece. The value of the stress at the point where the strain displacement is 100% at the time of pulling in the first cycle is recorded, which is considered to be stress at double elongation (N/mm²).

The permanent set of the elastic hot melt composition of the present invention is preferably 55% or more, more preferably 70% or more, and even more preferably 80% or more. When the permanent set of the elastic hot melt composition is 55% or more, the elastic hot melt composition shows more improved elastic recovery after elongation.

The permanent set of the elastic hot melt composition of the present invention is measured by the following measurement method using the above coating sample of the elastic hot melt composition.

### Method for Measuring Permanent Set

The coating sample of the elastic hot melt composition is cut into a strip having a width of 50 mm in the coating direction and 100 mm in a direction perpendicular to the coating direction to prepare a test piece. Next, the release-treated PET films at both sides are peeled off, and the test piece is fixed with a jig to a tensile tester in which the jig width is set to 50 mm such that the direction perpendicular to the coating direction of the elastic hot melt composition is positioned in an upright direction. The test piece is then pulled at a tensile speed of 500 mm/min until the strain displacement of the test piece becomes 300%. Then, the position is returned to the initial position at a rate of 500 mm/min. A process comprising pulling a test piece to the point where the strain displacement is 300% and then returning it to the initial position is taken as one cycle, and this cycle is repeated twice for the same test piece. In a graph in which the horizontal axis represents the strain displacement (%) and the vertical axis represents the stress (N/mm²), the permanent set (%) is calculated by the following equation: Permanent set (%) = (S2/S1) × 100, wherein S1 represents an integrated value at the time of pulling in the first cycle, and S2 represents an integrated value at the time of pulling in the second cycle.

The elastic hot melt composition of the present invention is produced by a known method. For example, the elastic hot melt composition of the present invention is produced by placing a thermoplastic elastomer, a plasticizer, a wax, various additives, and the like into a double-arm kneader heated to 150°C, followed by melt-kneading while heating.

The usage of the elastic hot melt composition is not particularly limited. Examples include sanitary materials, such as disposable diapers, sanitary napkins, and hospital gowns, and the like.

The elastic hot melt composition of the present invention is suitably used as an elastic film and an elastic member of an elastic laminate comprising an elastic member. Examples of the elastic laminate include an elastic laminate in which at least one surface side of the elastic hot melt composition is bonded to a nonwoven fabric. The nonwoven fabric used for the elastic laminate is not particularly limited. Examples include spunbonded nonwoven fabric, spunlace nonwoven fabric, needle-punched nonwoven fabric, and the like.

The usage of the elastic laminate is not particularly limited. For example, the elastic laminate can be suitably used for sanitary materials, such as disposable diapers and sanitary napkins.

When the elastic hot melt composition of the present invention is applied to a porous substrate, such as stretchable nonwoven fabric or paper, the elastic hot melt composition can be suitably used as an elastic reinforcing material for the porous substrate. Accordingly, the elastic laminate formed by applying the elastic hot melt composition to a porous substrate is also encompassed by the elastic laminates of the present invention.

The stretchable nonwoven fabric stretches to some extent when it is pulled in a certain direction; however, it does not easily return to its original length when the pulling force is removed. When an elastic laminate is formed by applying the elastic hot melt composition of the present invention to a porous substrate, such as elastic nonwoven fabric, the composition can function as an elastic reinforcing material, and impart a function of returning to its original length to the elastic laminate.

The stretchable nonwoven fabric is not particularly limited. Examples include spunlace nonwoven fabric and needle-punched nonwoven fabric. The method for applying the elastic hot melt composition to a porous substrate is not particularly limited. Examples include slot coating, curtain spray coating, spiral spray coating, film coating, and the like. When the elastic hot melt composition is applied by slot coating, the elastic hot melt composition easily soaks into a porous substrate, achieving further improved stress of the elastic laminate. Further, when the elastic hot melt composition is applied by spray coating, the elastic hot melt composition is prevented from soaking into a porous substrate, achieving further improved texture and air permeability.

The coating amount of the elastic hot melt composition onto a porous substrate is not particularly limited, and is preferably 1 to 200 g/m², more preferably 5 to 150 g/m², and even more preferably 10 to 100 g/m². When the lower limit of the coating amount is within this range, the stress and elastic recovery of the elastic laminate are further improved. When the upper limit of the coating amount is within this range, the texture of the elastic laminate is further improved.

### Examples

Examples of the present invention will be described below. The present invention is not limited to the following Examples.

The raw materials used in the Examples and Comparative Examples are as follows.

### Styrene Block Copolymer (A1):

- Styrene-ethylene/butylene/styrene-styrene (S-E/B/S-S) copolymer, MD6951, a product of Kraton Polymers Japan Ltd. (styrene content: 34 mass%, Mw = 100,000)

### Styrene Block Copolymer (A2):

- Styrene-ethylene-butylene-styrene (SEBS) copolymer, MD1648, a product of Kraton Polymers Japan Ltd. (styrene content: 20 mass%, Mw = 54,000)

### Styrene Block Copolymer (A3):

- Styrene-ethylene-butylene-styrene (SEBS) copolymer, H1041, a product of Asahi Kasei Co., Ltd. (styrene content = 30 mass%, Mw = 61,000)

### Plasticizer (B):

- Paraffinic process oil (B1), PS-32, a product of Idemitsu Kosan Co., Ltd. (pour point: -17.5°C)
- Hydrocarbon-based synthetic oil (B2),
   Lucant HC-10, a product of Mitsui Chemicals, Inc. (pour point: - 32.5°C)
- Naphthenic process oil (B3), Nyflex 222B, a product of Nynas (pour point: -35°C)

### Plasticizer (Wax) (C):

- Vinyl acetate wax (C1), AC-400, a product of Honeywell International Inc. (softening point: 92°C, acid value: 13 mgKOH/g)
- Maleic anhydride-modified wax (C2), MAW-0300, a product of Nippon Seiro Co., Ltd. (softening point: 75.5°C, acid value: 105 mgKOH/g)
- Polyethylene wax (C3), AC-8, a product of Honeywell International Inc. (softening point: 113°C)

### Antioxidant:

- Phenolic antioxidant, Irganox 1010, a product of BASF

### Examples and Comparative Examples

The raw materials above in each amount shown in Table 1 were placed in a stirring and kneading apparatus equipped with a heating device. The mixtures were kneaded with heating at 150°C for 90 minutes, thus producing elastic hot melt compositions.

The properties of the obtained elastic hot melt compositions were evaluated under the following measurement conditions.

### Melt Viscosity at 180°C

The hot melt adhesive was heated and melted, and the viscosity of the adhesive in a molten state at 180°C was measured using a Brookfield RVT viscometer (spindle No. 29).

### Coating Applicability

The elastic hot melt composition was placed in a melting tank heated to 180°C and discharged from a slot nozzle heated to 180°C for contact-coating onto a release-treated PET film. At this time, the coatability of the elastic hot melt composition was visually observed and evaluated according to the following evaluation criteria.
A: Coating was possible without coating unevenness.
B: Slight coating unevenness was observed; however, there was no problem in use.
C: Coating unevenness was noticeable, or a predetermined amount of the elastic hot melt composition was not discharged.

### Method for Preparing Coating Sample of Elastic Hot Melt Composition

The elastic hot melt composition was applied at a coating temperature of 180°C to a release-treated PET film by slot coating. The coating amount was 50 g/m², and the coating width was 100 mm. Next, another release-treated PET film was laminated and pressure-bonded at room temperature to form a laminate. The obtained laminate was stored for 24 hours in an atmosphere at 23°C and 50% RH, followed by cooling the elastic hot melt composition to room temperature for solidification. Then, the PET films on both sides of the solidified elastic hot melt composition were peeled off to thus prepare a coating sample of the elastic hot melt composition.

### Stretchability

The coating sample of the elastic hot melt composition was cut into a strip having a width of 50 mm in the coating direction and 100 mm in a direction perpendicular to the coating direction to prepare a test piece. Next, the release-treated PET films at both sides were peeled off, and the test piece was fixed with a jig to a tensile tester in which the jig width was set to 50 mm such that the direction perpendicular to the coating direction of the elastic hot melt composition was positioned in an upright direction. The test piece was then pulled at a tensile speed of 500 mm/min until the test piece broke. The displacement at which the test piece broke was considered to be an elongation at break (%), which was used as an evaluation standard for the stretchability of the elastic hot melt composition.

### Heating Stability

Twenty grams of the elastic hot melt composition was placed in a 70-ml glass bottle and allowed to stand at 180°C for 3 days. Then, separation and discoloration of the hot melt adhesive were visually observed under room temperature conditions, and evaluated according to the following evaluation criteria. The evaluation results "AA," "A," and "B" indicate no problems during actual use.
AA: No separation or discoloration of the hot melt adhesive was observed.
A: No separation of the hot melt adhesive was observed; however, there was slight discoloration.
B: No separation of the hot melt adhesive was observed; however, there was strong discoloration.
C: Separation of the hot melt adhesive was observed, and there was strong discoloration.

### Permanent Set

The coating sample of the elastic hot melt composition was cut into a strip having a width of 50 mm in the coating direction and 100 mm in a direction perpendicular to the coating direction to prepare a test piece. Next, the release-treated PET films at both sides were peeled off, and the test piece was fixed with a jig to a tensile tester in which the jig width was set to 50 mm such that the direction perpendicular to the coating direction of the elastic hot melt composition was positioned in an upright direction. The test piece was then pulled at a tensile speed of 500 mm/min until the strain displacement of the test piece became 300%. Then, the position was returned to the initial position at a rate of 500 mm/min. A process comprising pulling a test piece to the point where the strain displacement was 300% and then returning it to the initial position was taken as one cycle, and this cycle was repeated twice for the same test piece. In a graph in which the horizontal axis represents the strain displacement (%) and the vertical axis represents the stress (N/mm²), the permanent set (%) was calculated by the following equation: Permanent set (%) = (S2/S1) × 100, wherein S1 represents an integrated value at the time of pulling in the first cycle, and S2 represents an integrated value at the time of pulling in the second cycle.

### Stress at Double Elongation

The coating sample of the elastic hot melt composition was cut into a strip having a width of 50 mm in the coating direction and 100 mm in a direction perpendicular to the coating direction to prepare a test piece. Next, the release-treated PET films at both sides were peeled off, and the test piece was fixed with a jig to a tensile tester in which the jig width was set to 50 mm such that the direction perpendicular to the coating direction of the elastic hot melt composition was positioned in an upright direction. The test piece was then pulled at a tensile speed of 500 mm/min until the strain displacement of the test piece became 300%. Then, the position was returned to the initial position at a rate of 500 mm/min. A process comprising pulling a test piece to the point where the strain displacement was 300% and then returning it to the initial position was taken as one cycle, and this cycle was repeated twice for the same test piece. The value of the stress at the point where the strain displacement was 100% at the time of pulling in the first cycle was recorded, and was considered to be stress at double elongation (N/mm²).

### Dynamic Viscoelasticity Measurement (Local Maximum tan δ Value)

The dynamic viscoelasticity measurement was performed at a fixed frequency of 1 Hz by using a dynamic viscoelasticity measuring device (rotary shear mode). Specifically, the dynamic viscoelasticity measurement was performed by the following method. That is, the elastic hot melt composition was heated and melted at 180°C, and then dropped onto a release-treated PET film. Then, another release-treated PET film was laminated on the elastic hot melt composition so that its release surface was in contact with the elastic hot melt composition. The resulting product was compressed with a hot press heated to 120°C, and the thickness of the elastic hot melt composition was adjusted to about 1 to 2 mm. After the elastic hot melt composition sandwiched between the release films was allowed to stand for 24 hours at 23°C, the release films were removed to thus prepare a sample for dynamic viscoelasticity measurement. A dynamic viscoelasticity measurement (temperature increasing process) was performed with respect to the resulting sample by using a dynamic viscoelasticity measuring device at a frequency of 1 Hz (rotary shear mode), while increasing the temperature from -80 to 130°C at a rate of 5°C/min. The loss tangent tan δ (loss elastic modulus G"/storage elastic modulus G') was calculated from the measured storage elastic modulus G' and loss elastic modulus G". The value of tan δ at a temperature at which the tan δ was local maximum within a temperature range of -60 to -20°C was recorded, and was considered to be a local maximum tan δ value. For the dynamic viscoelasticity measuring device, a rotation rheometer (trade name: AR-G2) produced by TA Instruments was used.

Table 1 shows the results.

**Table 1**

| | | | Ex.1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Comp. Ex. 1 | Comp. Ex. 2 |
|---|---|---|---|---|---|---|---|---|---|---|---|---|---|---|---|---|
| Formulation (mass%) | Thermoplastic elastomer (A) | Hydrogenated styrene block copolymer A1 | 60 | 60 | 60 | 60 | 60 | 30 | 30 | 30 | 30 | 30 | 30 | 0 | 45 | 30 |
| | | Hydrogenated styrene block copolymer A2 | 0 | 0 | 0 | 0 | 0 | 30 | 30 | 30 | 30 | 40 | 30 | 0 | 0 | 30 |
| | | Hydrogenated styrene block copolymer A3 | 0 | 0 | 0 | 0 | 0 | 0 | 0 | 0 | 0 | 0 | 0 | 52 | 0 | 0 |
| | Liquid plasticizer (B) | Paraffinic process oil B1 | 39.5 | 0 | 0 | 0 | 0 | 0 | 0 | 0 | 0 | 0 | 14.5 | 37.5 | 44.5 | 0 |
| | | Hydrocarbon-based synthetic oil B2 | 0 | 39.5 | 0 | 34.5 | 29.5 | 29.5 | 14.5 | 5 | 14.5 | 14.5 | 0 | 0 | 0 | 14.5 |
| | | Naphthenic process oil B3 | 0 | 0 | 39.5 | 0 | 0 | 0 | 0 | 0 | 0 | 0 | 0 | 0 | 0 | 0 |
| | Solid plasticizer (C) | Vinyl acetate wax | 0 | 0 | 0 | 5 | 10 | 10 | 25 | 34.5 | 0 | 15 | 25 | 10 | 10 | 0 |
| | | Maleic anhydride-modified wax | 0 | 0 | 0 | 0 | 0 | 0 | 0 | 0 | 25 | 0 | 0 | 0 | 0 | 0 |
| | | Polyethylene wax | 0 | 0 | 0 | 0 | 0 | 0 | 0 | 0 | 0 | 0 | 0 | 0 | 0 | 25 |
| | Additive | Antioxidant | 0.5 | 0.5 | 0.5 | 0.5 | 0.5 | 0.5 | 0.5 | 0.5 | 0.5 | 0.5 | 0.5 | 0.5 | 0.5 | 0.5 |
| Evaluation results | Melt Viscosity at 180°C(mPa·s) | | 22,000 | 20,000 | 27,000 | 29,000 | 34,000 | 11,000 | 18,500 | 29,500 | 20,000 | 38,500 | 15,000 | 29,500 | 2,500 | 46,000 |
| | Coating applicability | | A | A | A | B | B | A | A | B | A | B | A | B | A | C |
| | Stretchability (%) | | 800 | 800 | 780 | 730 | 710 | 650 | 610 | 380 | 600 | 570 | 610 | 600 | 900 | 520 |
| | Heating stability | | AA | AA | AA | AA | AA | AA | A | B | B | A | A | A | A | C |
| | Permanent set (%) | | 85 | 90 | 81 | 89 | 88 | 86 | 77 | 60 | 75 | 85 | 75 | 75 | 80 | 59 |
| | Stress at double elongation (10⁻⁴ N/mm²) | | 2.4 | 2.4 | 2.4 | 3.2 | 4.0 | 5.2 | 7.2 | 11.6 | 7.2 | 5.6 | 6.8 | 3.2 | 0.4 | 8.0 |
| | Local maximum tan δ value | | 1.3 | 1.3 | 1.4 | 1.1 | 1.0 | 0.8 | 0.7 | 0.6 | 0.6 | 0.8 | 0.7 | 1.3 | 1.6 | 0.6 |

### Method for Preparing Nonwoven Fabric Coating Sample of Elastic Hot Melt Composition

The nonwoven fabric coating samples of Examples 13 and 14 were prepared by the following method, and the test pieces of Examples 13 and 14 and Comparative Example 3 were prepared.

### Example 13

The elastic hot melt composition of Example 5 shown in Table 1 was applied at a coating temperature of 190°C to a spunlace nonwoven fabric (F2650, a product of Suominen Corporation; areal weight: 25 g/m²) by curtain coating. The coating amount of the elastic hot melt composition was 50 g/m². Then, a release-treated PET film was laminated and pressure-bonded at room temperature to prepare a laminate. The obtained laminate was stored for 24 hours in an atmosphere at 23°C and 50% RH, followed by cooling the elastic hot melt composition to room temperature to prepare a nonwoven fabric coating sample of the elastic hot melt composition.

The release-treated PET film on one side of the thus-prepared nonwoven fabric coating sample was peeled off to prepare an elastic laminate. Then, a test piece was prepared by cutting the resulting product to a size of 50 mm in the coating direction of the elastic hot melt composition (MD direction of the spunlace nonwoven fabric) and 100 mm in a direction perpendicular to the coating direction (CD direction of the spunlace nonwoven fabric).

### Example 14

A nonwoven fabric coating sample of the elastic hot melt composition was prepared in the same manner as in Example 13, except that the coating amount of the elastic hot melt composition was changed to 80 g/m², followed by preparation of a test piece.

### Comparative Example 3

A test piece was prepared by cutting, to the same size as in Example 13, a spunlace nonwoven fabric (F2650, a product of Suominen Corporation; areal weight: 25 g/m²) to which the elastic hot melt composition was not applied.

Using each test piece prepared in Examples 13 and 14 and Comparative Example 3, the permanent set of the elastic laminates and the stress at elongation of the laminates were measured by the following measurement methods.

### Permanent Set of Elastic Laminate

The test piece was fixed with a jig to a tensile tester in which the jig width was set to 50 mm such that the direction perpendicular to the coating direction of the elastic hot melt composition was positioned in an upright direction. The test piece was then pulled at a tensile speed of 500 mm/min until the strain displacement of the test piece became 50%. Then, the position was returned to the initial position at a rate of 500 mm/min. A process comprising pulling a test piece to the point where the strain displacement was 300% and then returning it to the initial position was taken as one cycle, and this cycle was repeated twice for the same test piece. In a graph in which the horizontal axis represents the strain displacement (%) and the vertical axis represents the stress (N/mm²), the permanent set of the elastic laminate (%) was calculated by the following equation: Permanent set of the elastic laminate (%) = (S'2/S'1) × 100, wherein S'1 represents an integrated value at the time of pulling in the first cycle, and S'2 represents an integrated value at the time of pulling in the second cycle.

### Stress at Elongation of Elastic Laminate

The test piece was fixed with a jig to a tensile tester in which the jig width was set to 50 mm such that the direction perpendicular to the coating direction of the elastic hot melt composition was positioned in an upright direction. The test piece was then pulled at a tensile speed of 500 mm/min until the strain displacement of the test piece became 50%. Then, the position was returned to the initial position at a rate of 500 mm/min. A process comprising pulling a test piece to the point where the strain displacement was 50% and then returning it to the initial position was taken as one cycle, and this cycle was repeated twice for the same test piece. The value of the stress at the point where the strain displacement was 50% at the time of pulling in the first cycle was recorded, and was considered to be stress at elongation of the elastic laminate (N/mm²).

Table 2 shows the results.

**Table 2**

| | Ex. 13 | Ex. 14 | Comp. Ex. 3 |
|---|---|---|---|
| Nonwoven fabric | F2650 | F2650 | F2650 |
| Coating pattern | Curtain coating | Curtain coating | - |
| Coating amount (g/m²) | 50 | 80 | 0 |
| Permanent set of elastic laminate (%) | 43 | 54 | 22 |
| Stress at elongation of elastic laminate (10⁻⁴ N/mm²) | 0.49 | 0.59 | 0.05 |

## Claims

1. An elastic hot melt composition comprising a thermoplastic elastomer (A) and a plasticizer (B),
wherein
the thermoplastic elastomer (A) contains a hydrogenated product of a styrene block copolymer,
the thermoplastic elastomer (A) is present in an amount of 45 to 75 mass%, and the plasticizer (B) is present in an amount of 5 to 40 mass%, per 100 mass% of the elastic hot melt composition, and the elastic hot melt composition has a melt viscosity at 180°C of 40,000 mPa·s or less.

2. The elastic hot melt composition according to claim 1, wherein the thermoplastic elastomer (A) contains a styrene-ethylene/butylene/styrene-styrene copolymer.

3. The elastic hot melt composition according to claim 1 or 2, further comprising 5 to 35 mass% of wax (C) containing at least one group selected from the group consisting of a carbonyl group, a carboxyl group, and a carboxylic anhydride group, in the molecule.

4. The elastic hot melt composition according to any one of claims 1 to 3, having a loss tangent tan δ (loss elastic modulus G"/storage elastic modulus G') of 1.5 or less at a temperature at which the tan δ measured in a temperature increasing process at a frequency of 1 Hz by dynamic viscoelasticity measurement is local maximum at -60 to -20°C.

5. An elastic laminate comprising the elastic hot melt composition of any one of claims 1 to 4, wherein at least one surface side of the elastic hot melt composition is bonded to a nonwoven fabric.
